# EUROPEAN PATENT APPLICATION

(11) **EP 2 442 208 A2**
(43) Date of publication of application: **18.04.2012**
(21) Application number: 10194882.6
(22) Date of filing: 14.12.2010
(51) Int. Cl.: G06F 3/02

(54) **Illuminated keyboard for a notebook computer**

(30) Priority: 15.10.2010 TW 099135187
(71) Applicant: Primax Electronics Ltd, 114 Neihu, Taipei (TW)
(72) Inventor: Chen, Bo-An, Taipei (TW)
(74) Representative: Rees, Simon John Lewis

(57) **Abstract**

An illuminated keyboard of a notebook computer includes a base, a base cover, a key module and a light-guiding and supporting plate. The base is sheltered by the base cover. The light-guiding and supporting plate is disposed under a base cover opening of the base cover and fixed on the base cover. Since the key module is supported on the light-guiding and supporting plate and exposed outside the base cover opening, the thickness of the illuminated keyboard is not increased, and it is not necessary to shorten the travelling distance of the key module.

## Description

### FIELD OF THE INVENTION

The present invention relates to a keyboard of a notebook computer, and more particularly to an illuminated keyboard with a luminous function.

### BACKGROUND OF THE INVENTION

Generally, the common input device of a computer system includes for example a mouse, a keyboard or a trackball. Via the keyboard, the user may input characters and symbols into the computer system. As a consequence, most users and most manufacturers pay much attention to the development of keyboards.

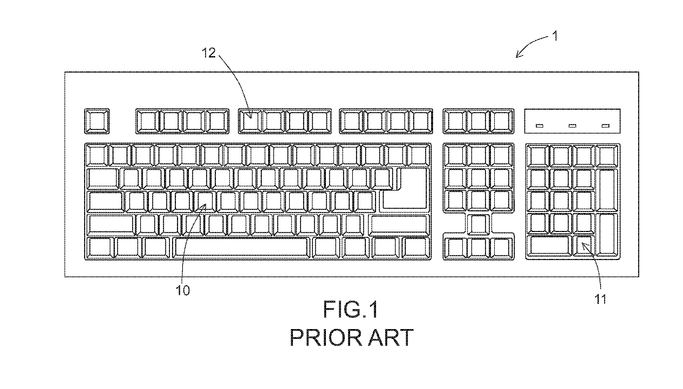

Hereinafter, the configurations and functions of a conventional keyboard will be illustrated with reference to FIG. 1. FIG. 1 is a schematic view illustrating the outward appearance of a conventional keyboard. The surface of the conventional keyboard 1 includes plural keys. These keys include ordinary keys 10, numeric keys 11 and function keys 12. When one or more keys are pressed by the user, a corresponding signal is issued to the computer, and thus the computer executes a function corresponding to the pressed key or keys. For example, when the ordinary keys 10 are pressed, corresponding English letters or symbols are inputted into the computer system. In addition, the function keys 12 (F1~F12) can be programmed to cause corresponding application programs to provide certain functions.

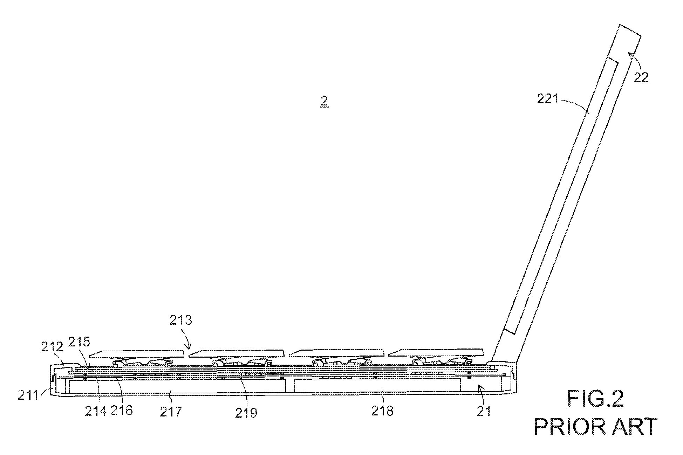

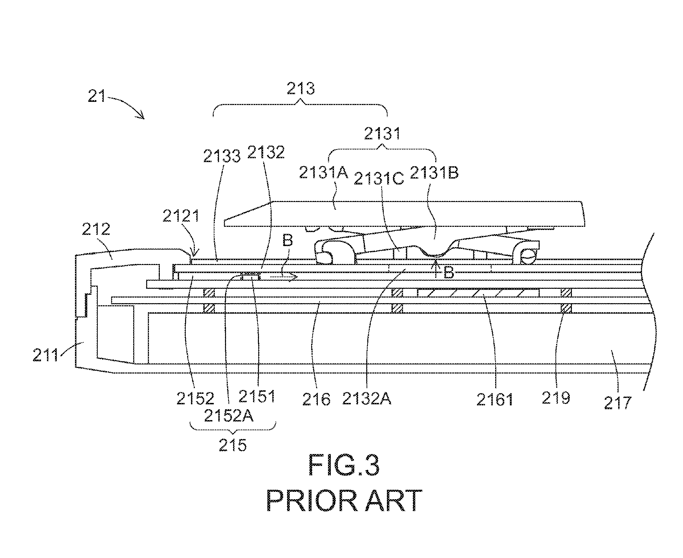

With the maturity of computing technologies, the conventional keyboard 1 that has basic functions fails to meet the users' requirements. For this reason, the keyboard manufacturers make efforts in designing novel keyboards with diversified functions. Take an illuminated keyboard of a notebook computer for example. FIG. 2 is a schematic side view illustrating an illuminated keyboard of a notebook computer according to the prior art. FIG. 3 is a schematic cross-sectional view illustrating a portion of the illuminated keyboard of FIG. 2. Please refer to FIGS. 2 and 3. The notebook computer 2 comprises an illuminated keyboard 21 and an upper cover 22. The upper cover 22 is rotatable with respect to the illuminated keyboard 21 to shelter the illuminated keyboard 21. In addition, the upper cover 22 comprises a display screen 221 for showing a computer image. The illuminated keyboard 21 comprises a base 211, a base cover 212, a key module 213, a supporting plate 214, a light-guiding module 215, a circuit board 216, a hard disk drive 217 and an optical disk drive 218.

In the illuminated keyboard 21, a controlling unit 2161 is mounted on the circuit board 216 for receiving or transmitting signals. The circuit board 216, the hard disk drive 217 and the optical disk drive 218 are disposed on the base 211. The base 211 is sheltered by the base cover 212. The supporting plate 214 is fixed on the base cover 212. The supporting plate 214 is made of aluminum (A1). The illuminated keyboard 21 further comprises a spacing element 219, which is arranged between the supporting plate 214 and the hard disk drive 217 (or the optical disk drive 218). By penetrating the spacing element 219 through the circuit board 216, the circuit board 216 is fixed on the spacing element 219. In other words, the spacing element 219 is configured to separate the supporting plate 214 from the circuit board 216, separate the hard disk drive 217 from the circuit board 216, and separate the optical disk drive 218 from the circuit board 216, so that the circuit board 216 is not contacted with the supporting plate 214, the hard disk drive 217 and the optical disk drive 218. An example of the spacing element 219 is a copper post.

The base cover 212 has a base cover opening 2121. The key module 213 is disposed on the supporting plate 214. The key module 213 is protruded from the bottom of the base cover 212 and penetrated through the base cover opening 2121, so that plural keys 2131 of the key module 213 are exposed outside the base cover opening 2121. Via a flexible printed circuit (FPC) (not shown), the key module 213 is connected with the circuit board 216. In addition to the plural keys 2131, the key module 213 further comprises a frame 2132 and a membrane switch circuit member 2133. The frame 2132 has plural frame openings 2132A corresponding to the plural keys 2131. The frame 2132 is made of a metallic material. The membrane switch circuit member 2133 is disposed on the frame 2132. The key 2131 comprises a keycap 2131A, a scissors-type connecting member 2131B and an elastic element 2131C. The keycap 2131A is exposed outside the base cover opening 2121. The scissors-type connecting member 2131B is arranged between the frame 2132 and the keycap 2131A for connecting the frame 2132 and the keycap 2131A, and allowing the keycap 2131A to be movable upwardly or downwardly with respect to the frame 2132. The elastic element 2131C is arranged between the membrane switch circuit member 2133 and the keycap 2131A. When the keycap 2131A is pressed, the elastic element 2131C is compressed to push against the membrane switch circuit member 2133, so that a key signal is outputted from the membrane switch circuit member 2133. Whereas, when the pressing force exerted on the keycap 2131A is eliminated, an elastic force provided by the elastic element 2131C is acted on the keycap 2131A, so that the keycap 2131A is moved upwardly and returned to an original position. In addition, the elastic element 2131C is a transparent rubbery element, which is light-transmissible.

The light-guiding module 215 comprises a light source 2151 and a light-guiding plate 2152. The light-guiding plate 2152 has a light-guiding plate opening 2152A. The light source 2151 may be inserted into the light-guiding plate opening 2152A. The light source 2151 is used for generating a light beam B, and then the light beam B is directed to the light-guiding plate 2152. Via another flexible printed circuit (FPC) (not shown), the light source 2151 is connected with the circuit board 216, so that the light source 2151 can be driven. An example of the light source 2151 is a light emitting diode (LED).

Please refer to FIG. 3 again. When the key 2131 is pressed and moved downwardly with respect to the frame 2132, the scissors-type connecting member 2131B is switched from an open-scissors state (as shown in FIG. 3) to a stacked state (not shown). In addition, as the keycap 2131A is moved downwardly to press the elastic element 2131C, the elastic element 2131C pushes against the membrane switch circuit member 2133, and thus a key signal corresponding to the pressed key 2131 is generated. Whereas, when the pressing force exerted on the key 2131 is eliminated, an elastic force provided by the elastic element 2131C is acted on the keycap 2131A. Due to the elastic force, the keycap 2131A is moved upwardly with respect to the frame 2132, and the scissors-type connecting member 2131B is switched from the stacked state to the open-scissors state. Consequently, the keycap 2131A is returned to its original position. After the light beam B is emitted by the light source 2151, the light beam B is directed to the light-guiding plate 2152. By the light-guiding plate 2152, the propagating direction of the light beam B is changed. Consequently, the light beam B is transmitted to the membrane switch circuit member 2133 through the frame opening 2132A. Then, the light beam B successively passes through the membrane switch circuit member 2133, the elastic element 2131C and the keycap 2131A, thereby illuminating the key 2131.

Since the conventional illuminated keyboard 21 has an additional light-guiding module 215 in comparison with the conventional keyboard 1, the light-guiding module 215 may increase the overall thickness of the conventional illuminated keyboard 21. Under this circumstance, it is difficult to reduce the thickness of the conventional illuminated keyboard 21. If the range of upwardly and downwardly moving the keycap 2131A (i.e. the travelling distance of the key 2131) is narrowed, the thickness of the conventional illuminated keyboard 21 may be reduced. Although the thickness of the conventional illuminated keyboard 21 can be maintained unchanged, some drawbacks occur. For example, when the key 2131 is pressed, the finger's tactile feel is undesired for the user because the travelling distance of the key 2131 is shortened.

Therefore, there is a need of providing an illuminated keyboard having an enhanced finger's tactile feel without increasing the thickness of the illuminated keyboard.

### SUMMARY OF THE INVENTION

The present invention provides an illuminated keyboard of a notebook computer without increasing the thickness thereof.

The present invention also provides an illuminated keyboard of a notebook computer, in which the illuminated keyboard has an enhanced finger's tactile feel.

The present invention further provides a cost-effective illuminated keyboard of a notebook computer.

In accordance with an aspect of the present invention, there is provided an illuminated keyboard of a notebook computer. The illuminated keyboard includes a base, a base cover, a key module, a light source and a light-guiding and supporting plate. The base is sheltered by the base cover. The base cover has a base cover opening. The key module is protruded from a bottom of the base cover and penetrated through the base cover opening. The key module includes plural keys, which are exposed outside the base cover opening. The light source is arranged between the base and the base cover for emitting a light beam. The light-guiding and supporting plate is disposed under the base cover opening of the base cover and fixed on the base cover. The light beam is guided by the light-guiding and supporting plate to be transmitted through the key module. The key module is supported and fixed on the light-guiding and supporting plate.

In an embodiment, the illuminated keyboard further includes a circuit board, which is disposed within the base, arranged under the light-guiding and supporting plate and connected with the key module and the light source for driving the key module and the light source.

In an embodiment, the light source is mounted on the circuit board, and the light source is inserted into a supporting plate opening of the light-guiding and supporting plate, so that the light beam emitted by the light source is directed to the light-guiding and supporting plate.

In an embodiment, the light source is mounted on the circuit board, and the light source is arranged beside the light-guiding and supporting plate, so that the light beam emitted by the light source is directed to the light-guiding and supporting plate.

In an embodiment, the illuminated keyboard further includes a spacing element, which is arranged between the light-guiding and supporting plate and the circuit board for separating the light-guiding and supporting plate from the circuit board, so that the circuit board is fixed on the spacing element.

In an embodiment, the light-guiding and supporting plate includes a reflector plate. The reflector plate is arranged on a bottom of the light-guiding and supporting plate for reflecting the light beam, so that the light beam is guided to be transmitted through the light-guiding and supporting plate and the key module.

In an embodiment, the base cover further includes a receptacle for accommodating an edge of the key module, thereby avoiding detachment of the key module from the base cover opening of the base cover.

In an embodiment, the key module further includes a frame and a membrane switch circuit member disposed on the frame. Each of the keys includes a keycap, a scissors-type connecting member and an elastic element. The keycap is exposed outside the base cover opening. The scissors-type connecting member is arranged between the frame and the keycap for connecting the frame and the keycap, and allowing the keycap to be moved upwardly and downwardly with respect to the frame. The elastic element is arranged between the membrane switch circuit member and the keycap. When the keycap is pressed, the elastic element is compressed to push against the membrane switch circuit member, so that a key signal is outputted from the membrane switch circuit member. Whereas, when a pressing force exerted on the keycap is eliminated, an elastic force provided by the elastic element is acted on the keycap, so that the keycap is returned to an original position.

In an embodiment, the frame is made of a transparent material.

In an embodiment, the frame is made of a metallic material.

The above objects and advantages of the present invention will become more readily apparent to those ordinarily skilled in the art after reviewing the following detailed description and accompanying drawings, in which:

### BRIEF DESCRIPTION OF THE DRAWINGS

FIG. 1 is a schematic view illustrating the outward appearance of a conventional keyboard;

FIG. 2 is a schematic side view illustrating an illuminated keyboard of a notebook computer according to the prior art;

FIG. 3 is a schematic cross-sectional view illustrating a portion of the illuminated keyboard of FIG. 2;

FIG. 4 is a schematic side view illustrating an illuminated keyboard of a notebook computer according to a first embodiment of the present invention;

FIG. 5 is a schematic cross-sectional view illustrating a portion of the illuminated keyboard of FIG. 4;

FIG. 6 is a schematic side view illustrating an illuminated keyboard of a notebook computer according to a second embodiment of the present invention; and

FIG. 7 is a schematic cross-sectional view illustrating a portion of the illuminated keyboard of FIG. 6.

### DETAILED DESCRIPTION OF THE PREFERRED EMBODIMENT

For obviating the drawbacks encountered from the prior art, the present invention provides an illuminated keyboard. For example, the illuminated keyboard is applied to a notebook computer.

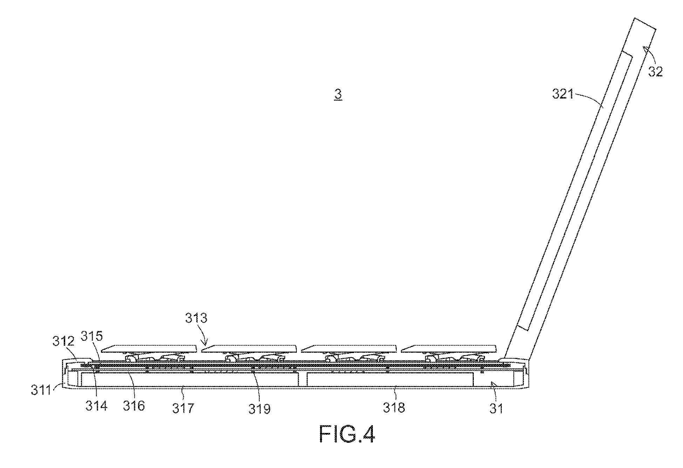

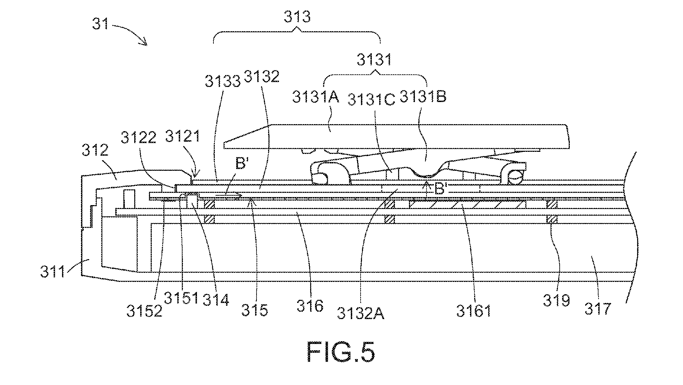

FIG. 4 is a schematic side view illustrating an illuminated keyboard of a notebook computer according to a first embodiment of the present invention. FIG. 5 is a schematic cross-sectional view illustrating a portion of the illuminated keyboard of FIG. 4. Please refer to FIGS. 4 and 5. The notebook computer 3 comprises an illuminated keyboard 31 and an upper cover 32. The upper cover 32 is rotatable with respect to the illuminated keyboard 31 to shelter the illuminated keyboard 31. In addition, the upper cover 32 comprises a display screen 321 for showing a computer image. The illuminated keyboard 31 comprises a base 311, a base cover 312, a key module 313, a light source 314, a light-guiding and supporting plate 315, a circuit board 316, a hard disk drive 317 and an optical disk drive 318. The light source 314 is arranged between the base 311 and the base cover 312.

As shown in FIG. 5, a controlling unit 3161 is mounted on the circuit board 316 for receiving or transmitting signals. The circuit board 316, the hard disk drive 317 and the optical disk drive 318 are disposed on the base 311. The hard disk drive 317 and the optical disk drive 318 may be deemed to belong to the notebook computer 3. In addition, since the hard disk drive 317 and the optical disk drive 318 are not main components of the illuminated keyboard 31, the configurations thereof are not redundantly described herein. The circuit board 316 is disposed under the light-guiding and supporting plate 315. In addition, the circuit board 316 is connected with the key module 313 and the light source 314 for driving the key module 313 and the light source 314. In this embodiment, the key module 313 is connected with the circuit board 316 via a flexible printed circuit (FPC) (not shown). The light source 314 is directly mounted on the circuit board 316. The illuminated keyboard 31 further comprises a spacing element 319, which is arranged between the light-guiding and supporting plate 315 and the hard disk drive 317 (or the optical disk drive 318). By penetrating the spacing element 319 through the circuit board 316, the circuit board 316 is fixed on the spacing element 319. In other words, the spacing element 319 is configured to separate the light-guiding and supporting plate 315 from the circuit board 316, separate the hard disk drive 317 from the circuit board 316, and separate the optical disk drive 318 from the circuit board 316, so that the circuit board 316 is not contacted with the light-guiding and supporting plate 315, the hard disk drive 317 and the optical disk drive 318. An example of the spacing element 319 is a copper post. The light source 314 is used for emitting a light beam B'. An example of the light source 314 is a light emitting diode (LED).

The base 311 is sheltered by the base cover 312. In addition, the base cover 312 has a base cover opening 3121. The light-guiding and supporting plate 315 is disposed under the base cover opening 3121 of the base cover 312, and fixed on the base cover 312. After the light beam B' is emitted by the light source 314, the light beam B' is guided by the light-guiding and supporting plate 315, so that the light source 314 is transmitted through the key module 313. The light-guiding and supporting plate 315 is also configured to support the key module 313, so that the key module 313 is fixed on the light-guiding and supporting plate 315. In this embodiment, the light-guiding and supporting plate 315 is made of a transparent material, so that the light-guiding and supporting plate 315 is light-transmissible. In addition, the light-guiding and supporting plate 315 comprises a supporting plate opening 3151 and a reflector plate 3152. The light source 314, which is mounted on the circuit board 316, is further inserted into the supporting plate opening 3151 through the bottom of the light-guiding and supporting plate 315. After the light beam B' is emitted by the light source 314, the light beam B' is directed to the light-guiding and supporting plate 315 and guided by the light-guiding and supporting plate 315. The reflector plate 3152 is arranged at the lower portion of the light-guiding and supporting plate 315 for reflecting the light beam B'. After the light beam B' is reflected by the reflector plate 3152, the light beam B' successively passes through the light-guiding and supporting plate 315 and the key module 313. The key module 313 is disposed on light-guiding and supporting plate 315. In addition, the key module 313 is protruded from the bottom of the base cover 312 and penetrated through the base cover opening 3121, so that plural keys 3131 of the key module 313 are exposed outside the base cover opening 3121.

In addition to the plural keys 3131, the key module 313 further comprises a frame 3132 and a membrane switch circuit member 3133. The frame 3132 has plural frame openings 3132A corresponding to the plural keys 3131. The frame 3132 is made of a metallic material. The membrane switch circuit member 3133 is disposed on the frame 3132. The key 3131 comprises a keycap 3131A, a scissors-type connecting member 3131B and an elastic element 3131C. The keycap 3131A is exposed outside the base cover opening 3121. The scissors-type connecting member 3131B is arranged between the frame 3132 and the keycap 3131A for connecting the frame 3132 and the keycap 3131A, and allowing the keycap 3131A to be movable upwardly or downwardly with respect to the frame 3132. The elastic element 3131C is arranged between the membrane switch circuit member 3133 and the keycap 3131A. When the keycap 3131A is pressed, the elastic element 3131C is compressed to push against the membrane switch circuit member 3133, so that a key signal is outputted from the membrane switch circuit member 3133. Whereas, when the pressing force exerted on the keycap 3131A is eliminated, an elastic force provided by the elastic element 3131C is acted on the keycap 3131A, so that the keycap 3131A is moved upwardly and returned to an original position. In addition, the elastic element 3131C is a transparent rubbery element, which is light-transmissible. In this embodiment, the base cover 312 further comprises a receptacle 3122 for accommodating an edge of the key module 313 (i.e. an end of the frame 3132) in order to avoid detachment of the key module 313 from the base cover opening 3121 of the base cover 312.

Please refer to FIG. 5 again. When the key 3131 is pressed and moved downwardly with respect to the frame 3132, the scissors-type connecting member 3131B is switched from an open-scissors state (as shown in FIG. 5) to a stacked state (not shown). In addition, as the keycap 3131A is moved downwardly to press the elastic element 3131C, the elastic element 3131C pushes against the membrane switch circuit member 3133, and thus a key signal corresponding to the pressed key 3131 is generated. Whereas, when the pressing force exerted on the key 3131 is eliminated, an elastic force provided by the elastic element 3131C is acted on the keycap 3131A. Due to the elastic force, the keycap 3131A is moved upwardly with respect to the frame 3132, and the scissors-type connecting member 3131B is switched from the stacked state to the open-scissors state. Consequently, the keycap 3131A is returned to its original position. After the light beam B' is emitted by the light source 314, the light beam B' is directed to the light-guiding and supporting plate 315. By the light-guiding and supporting plate 315, the propagating direction of the light beam B' is changed. Consequently, the light beam B' is transmitted to the membrane switch circuit member 3133 through the frame opening 3132A. Then, the light beam B' successively passes through the membrane switch circuit member 3133, the elastic element 3131C and the keycap 3131A, thereby illuminating the key 3131.

From the above discussions, the illuminated keyboard of the notebook computer of the present invention uses the light-guiding and supporting plate to replace the supporting plate and the light-guiding plate within the base of the conventional illuminated keyboard. Since the light-guiding and supporting plate has the functions of supporting the key module and guiding the light beam and the light-guiding and supporting plate is thicker than the conventional light-guiding plate, the light-guiding efficacy of the light-guiding and supporting plate is better than the conventional light-guiding plate. Moreover, since the thickness of the light-guiding and supporting plate is smaller than the thicknesses of the conventional light-guiding plate and the conventional supporting plate, the thickness of the illuminated keyboard of the present invention is not increased when compared with the conventional illuminated keyboard. Moreover, since the thickness of the illuminated keyboard of the present invention is not considerably increased, it is not necessary to shorten the travelling distance of the key. Under this circumstance, the finger's tactile feel is enhanced.

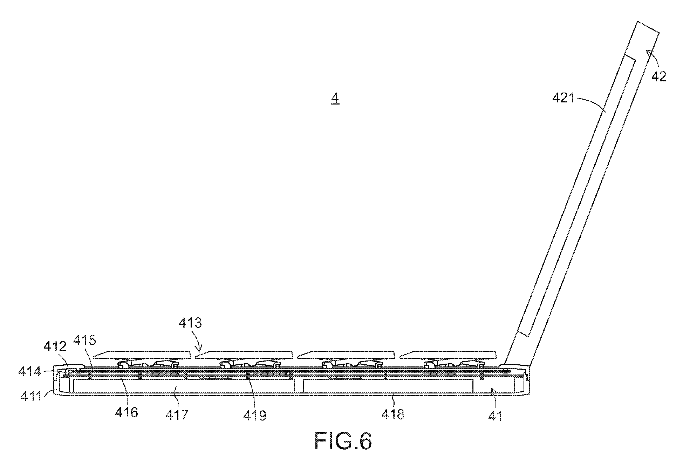

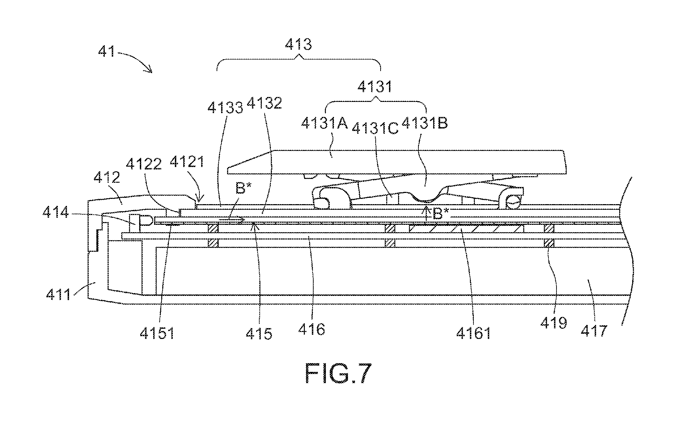

Hereinafter, another illuminated keyboard of a notebook computer will be illustrated with reference to FIGS. 6 and 7. FIG. 6 is a schematic side view illustrating an illuminated keyboard of a notebook computer according to a second embodiment of the present invention. FIG. 7 is a schematic cross-sectional view illustrating a portion of the illuminated keyboard of FIG. 6. The notebook computer 4 comprises an illuminated keyboard 41 and an upper cover 42. The upper cover 42 is rotatable with respect to the illuminated keyboard 41 to shelter the illuminated keyboard 41. In addition, the upper cover 42 comprises a display screen 421 for showing a computer image. The illuminated keyboard 41 comprises a base 411, a base cover 412, a key module 413, a light source 414, a light-guiding and supporting plate 415, a circuit board 416, a hard disk drive 417 and an optical disk drive 418. The light source 414 is arranged between the base 411 and the base cover 412.

As shown in FIG. 7, a controlling unit 4161 is mounted on the circuit board 416 for receiving or transmitting signals. The circuit board 416, the hard disk drive 417 and the optical disk drive 418 are disposed on the base 411. The circuit board 416 is disposed under the light-guiding and supporting plate 415. In addition, the circuit board 416 is connected with the key module 413 and the light source 414 for driving the key module 413 and the light source 414. In this embodiment, the key module 413 is connected with the circuit board 416 via a flexible printed circuit (FPC) (not shown). The light source 414 is directly mounted on the circuit board 416, and arranged beside the light-guiding and supporting plate 415. The illuminated keyboard 41 further comprises a spacing element 419, which is arranged between the light-guiding and supporting plate 415 and the hard disk drive 417 (or the optical disk drive 418). By penetrating the spacing element 419 through the circuit board 416, the circuit board 416 is fixed on the spacing element 419. In other words, the spacing element 419 is configured to separate the light-guiding and supporting plate 415 from the circuit board 416, separate the hard disk drive 417 from the circuit board 416, and separate the optical disk drive 418 from the circuit board 416, so that the circuit board 416 is not contacted with the light-guiding and supporting plate 415, the hard disk drive 417 and the optical disk drive 418. An example of the spacing element 419 is a copper post. The light source 414 is used for emitting a light beam B*. An example of the light source 414 is a light emitting diode (LED).

The base 411 is sheltered by the base cover 412. In addition, the base cover 412 has a base cover opening 4121. The light-guiding and supporting plate 415 is disposed under the base cover opening 4121 of the base cover 412, and fixed on the base cover 412. After the light beam B* is emitted by the light source 414, the light beam B* is guided by the light-guiding and supporting plate 415, so that the light source 414 is transmitted through the key module 413. The light-guiding and supporting plate 415 is also configured to support the key module 413, so that the key module 413 is fixed on the light-guiding and supporting plate 415. In this embodiment, the light-guiding and supporting plate 415 is made of a transparent material, so that the light-guiding and supporting plate 415 is light-transmissible. In addition, the light-guiding and supporting plate 415 comprises reflector plate 4151. The reflector plate 4151 is arranged at the lower portion of the light-guiding and supporting plate 415 for reflecting the light beam B*. After the light beam B* is reflected by the reflector plate 4151, the light beam B* successively passes through the light-guiding and supporting plate 415 and the key module 413. The key module 413 is disposed on light-guiding and supporting plate 415. In addition, the key module 413 is protruded from the bottom of the base cover 412 and penetrated through the base cover opening 4121, so that plural keys 4131 of the key module 413 are exposed outside the base cover opening 4121.

In addition to the plural keys 4131, the key module 413 further comprises a frame 4132 and a membrane switch circuit member 4133. In this embodiment, the frame 4132 is made of a transparent material, so that the light beam B* is transmissible through the frame 4132 without being hindered by the frame 4132. The membrane switch circuit member 4133 is disposed on the frame 4132. The key 4131 comprises a keycap 4131A, a scissors-type connecting member 4131B and an elastic element 4131C. The keycap 4131A is exposed outside the base cover opening 4121. The scissors-type connecting member 4131B is arranged between the frame 4132 and the keycap 4131A for connecting the frame 4132 and the keycap 4131A, and allowing the keycap 4131A to be movable upwardly or downwardly with respect to the frame 4132. The elastic element 4131C is arranged between the membrane switch circuit member 4133 and the keycap 4131A. When the keycap 4131A is pressed, the elastic element 4131C is compressed to push against the membrane switch circuit member 4133, so that a key signal is outputted from the membrane switch circuit member 4133. Whereas, when the pressing force exerted on the keycap 4131A is eliminated, an elastic force provided by the elastic element 4131C is acted on the keycap 4131A, so that the keycap 4131A is moved upwardly and returned to an original position. In addition, the elastic element 4131C is a transparent rubbery element, which is light-transmissible. In this embodiment, the base cover 412 further comprises a receptacle 4122 for accommodating an edge of the key module 413 (i.e. an end of the frame 4132) in order to avoid detachment of the key module 413 from the base cover opening 4121 of the base cover 412.

In this embodiment, the operations of pressing the key 4131 are similar to those illustrated in the first embodiment, and are not redundantly described herein. In addition, the function of the light source 414 to emit the light beam B* is similar to that of the first embodiment. In comparison with the first embodiment, the light source 414 of the illuminated keyboard of this embodiment is arranged beside the light-guiding and supporting plate 415. Consequently, the light beam B* emitted by the light source 414 is laterally incident into the light-guiding and supporting plate 415, and the propagating direction of the light beam B* is changed by the light-guiding and supporting plate 415, so that the light beam B* is guided to the membrane switch circuit member 4133. The following path of the light beam B* is similar to that of the first embodiment, and is not redundantly described herein.

In accordance with a first feature of this embodiment, since the frame is light-transmissible, the frame opening for passing the light beam may be omitted. In accordance with a second feature of this embodiment, since the light source is arranged beside the light-guiding and supporting plate, the supporting plate opening for inserting the light source therein may be omitted. Since the light source is not inserted into the light-guiding and supporting plate, a large-sized LED may be used as the light source. Generally, the large-sized LED is cost-effective, so that the fabricating cost of the illuminated keyboard is reduced.

From the above description, the illuminated keyboard of the notebook computer of the present invention uses the light-guiding and supporting plate to replace the supporting plate and the light-guiding plate within the base of the conventional illuminated keyboard. Consequently, the illuminated keyboard of the present invention has increased light-guiding efficacy without increasing the thickness of the illuminated keyboard. Under this circumstance, the finger's tactile feel is enhanced. Therefore, the illuminated keyboard of the notebook computer of the present invention is effective to obviate the drawbacks encountered from the conventional illuminated keyboard.

While the invention has been described in terms of what is presently considered to be the most practical and preferred embodiments, it is to be understood that the invention needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. An illuminated keyboard of a notebook computer, said illuminated keyboard comprising:
a base;
a base cover sheltering said base, wherein said base cover has a base cover opening;
a key module protruded from a bottom of said base cover and penetrated through said base cover opening, wherein said key module comprises plural keys, which are exposed outside said base cover opening;
a light source arranged between said base and said base cover for emitting a light beam; and
a light-guiding and supporting plate disposed under said base cover opening of said base cover and fixed on said base cover, wherein said light beam is guided by said light-guiding and supporting plate to be transmitted through said key module, and said key module is supported and fixed on said light-guiding and supporting plate.

2. The illuminated keyboard according to claim 1 further comprising a circuit board, which is disposed within said base, arranged under said light-guiding and supporting plate and connected with said key module and said light source for driving said key module and said light source.

3. The illuminated keyboard according to claim 2 wherein said light source is mounted on said circuit board, and said light source is inserted into a supporting plate opening of said light-guiding and supporting plate, so that said light beam emitted by said light source is directed to said light-guiding and supporting plate.

4. The illuminated keyboard according to claim 2 wherein said light source is mounted on said circuit board, and said light source is arranged beside said light-guiding and supporting plate, so that said light beam emitted by said light source is directed to said light-guiding and supporting plate.

5. The illuminated keyboard according to claim 2 further comprising a spacing element, which is arranged between said light-guiding and supporting plate and said circuit board for separating said light-guiding and supporting plate from said circuit board, so that said circuit board is fixed on said spacing element.

6. The illuminated keyboard according to claim 1 wherein said light-guiding and supporting plate comprises a reflector plate, wherein said reflector plate is arranged on a bottom of said light-guiding and supporting plate for reflecting said light beam, so that said light beam is guided to be transmitted through said light-guiding and supporting plate and said key module.

7. The illuminated keyboard according to claim 1 wherein said base cover further comprises a receptacle for accommodating an edge of the key module, thereby avoiding detachment of said key module from said base cover opening of said base cover.

8. The illuminated keyboard according to claim 1 wherein said key module further comprises:
a frame; and
a membrane switch circuit member disposed on said frame,
wherein each of said keys comprises:
a keycap exposed outside said base cover opening;
a scissors-type connecting member arranged between said frame and said keycap for connecting said frame and said keycap, and allowing said keycap to be moved upwardly and downwardly with respect to said frame; and
an elastic element arranged between said membrane switch circuit member and said keycap, wherein when said keycap is pressed, said elastic element is compressed to push against said membrane switch circuit member, so that a key signal is outputted from the membrane switch circuit member, wherein when a pressing force exerted on said keycap is eliminated, an elastic force provided by said elastic element is acted on said keycap, so that said keycap is returned to an original position.

9. The illuminated keyboard according to claim 8 wherein said frame is made of a transparent material.

10. The illuminated keyboard according to claim 8 wherein said frame is made of a metallic material.
